(19) Europäisches Patentamt / European Patent Office / Office européen des brevets

(11) **EP 4 686 289 A2**

(12) **EUROPEAN PATENT APPLICATION**

(43) Date of publication:
**28.01.2026 Bulletin 2026/05**

(21) Application number: **25222773.1**

(22) Date of filing: **27.09.2022**

(51) International Patent Classification (IPC):
**H04W 72/0446** (2023.01)

(52) Cooperative Patent Classification (CPC):
**H04L 1/08; H04L 1/189; H04L 5/0051;**
**H04L 5/0078; H04L 5/0094; H04L 25/0224;**
**H04W 72/0446;** H04W 72/1268

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **28.09.2021 KR 20210128141**

(62) Document number(s) of the earlier application(s) in accordance with Art. 76 EPC:
**22876798.4 / 4 412 134**

(71) Applicant: **LG Electronics Inc.**
**Yeongdeungpo-gu**
**Seoul 07336 (KR)**

(72) Inventors:
• **SHIM, Jaenam**
**06772 SEOUL (KR)**

• **KO, Hyunsoo**
**06772 SEOUL (KR)**
• **YOU, Hyangsun**
**06772 SEOUL (KR)**

(74) Representative: **Plasseraud IP**
**104 Rue de Richelieu**
**CS92104**
**75080 Paris Cedex 02 (FR)**

Remarks:
This application was filed on 11-12-2025 as a divisional application to the application mentioned under INID code 62.

(54) **METHOD AND DEVICE FOR TRANSMITTING OR RECEIVING UPLINK CHANNEL ON BASIS OF DEMODULATION REFERENCE SIGNAL BUNDLING IN WIRELESS COMMUNICATION SYSTEM**

(57) Disclosed are a method and a device for transmitting or receiving an uplink channel on the basis of demodulation reference signal (DMRS) bundling in a wireless communication system. A method by which a terminal transmits an uplink channel in a wireless communication system, according to one embodiment of the present disclosure, comprises the steps of: receiving configuration information related to the DMRS bundling for the uplink channel from a network; and transmitting the uplink channel to the network in a first actual time domain window (TDW) within a set TDW or in the first actual TDW and a second actual TDW within the set TDW, wherein the first actual TDW ends in relation to an event, and whether to generate the second actual TDW in response to the event may be based on capabilities of the terminal, on the basis of the event being a first type event.

FIG. 9

Receive information related to DMRS bundling for uplink channel — S910

Transmit uplink channel in at least one actual TDW within configured TDW based on event type and/or terminal capability — S920

## Description

[Technical Field]

The present disclosure relates to a wireless communication system, and in more detail, relates to a method and a device for transmitting or receiving an uplink channel based on demodulation reference signal bundling in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device for transmitting or receiving a demodulation reference signal(DMRS)-based uplink channel in a wireless communication system.

An additional technical problem of the present disclosure is to provide a method and a device for start or end of a time domain window related to application of DMRS bundling in a wireless communication system.

An additional technical problem of the present disclosure is to provide a method and a device for event-based start or end of a time domain window related to application of DMRS bundling in a wireless communication system.

The technical objects to be achieved by the present disclosure are not limited to the above-described technical objects, and other technical objects which are not described herein will be clearly understood by those skilled in the pertinent art from the following description.

[Technical Solution]

The disclosure is defined in the appended independent claims. Dependent claims constitute embodiments of the disclosure. In the present description and drawings, any examples and technical descriptions of apparatuses, products and/or methods which are not covered by the claims should be taken as background art or examples useful for understanding the disclosure.

[Technical Effects]

According to an embodiment of the present disclosure, a method and a device for transmitting or receiving a demodulation reference signal(DMRS)-based uplink channel in a wireless communication system may be provided.

According to an embodiment of the present disclosure, a method and a device for start or end of a time domain window related to application of DMRS bundling in a wireless communication system may be provided.

According to an embodiment of the present disclosure, a method and a device for event-based start or end of a time domain window related to application of DMRS bundling in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram for describing examples of PUSCH repetition transmission to which the present disclosure may be applied.

FIG. 8 is a diagram showing examples of a DMRS symbol position to which the present disclosure may be applied.

FIG. 9 is a diagram for describing an example of an uplink channel transmission method of a terminal according to the present disclosure.

FIG. 10 is a diagram for describing an example of an uplink channel reception method of a base station according to the present disclosure.

FIG. 11 is a diagram showing examples of a TDW to which the present disclosure may be applied.

FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

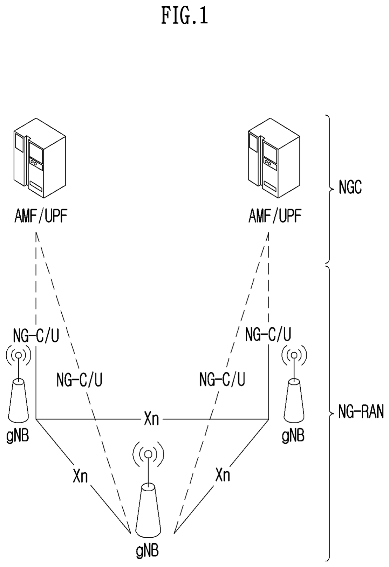

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

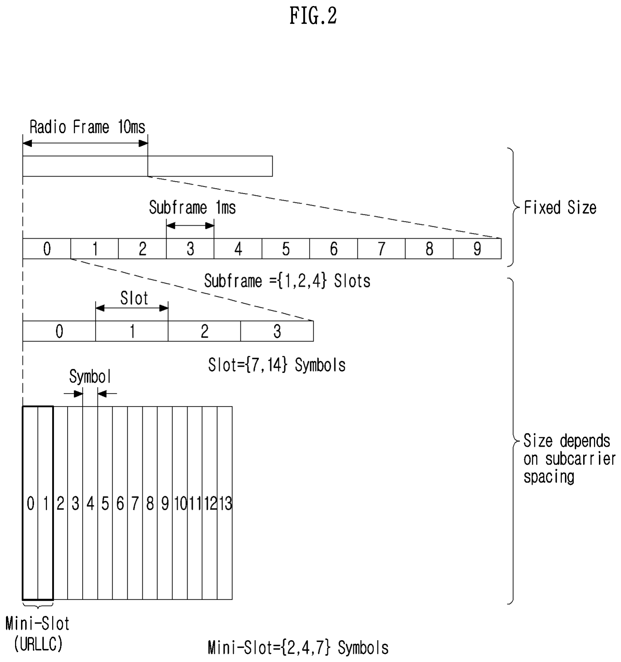

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services.

For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively.

In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu\in\{0,...,N_{slot}^{subframe,\mu}-1\}$ in a subframe and are numbered in an increasing order of $n_{s,f}^\mu\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{stot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

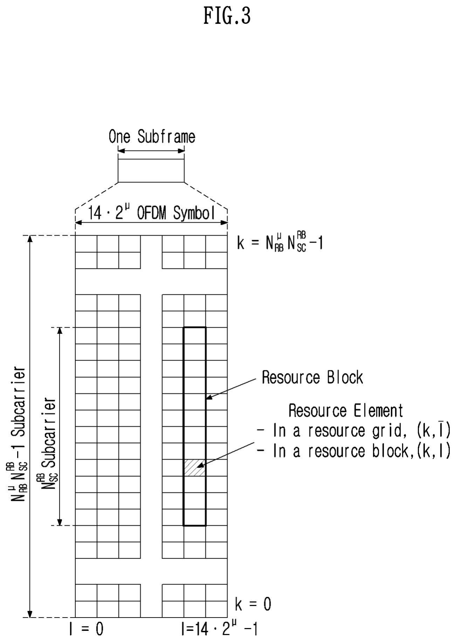

FIG. 3 illustrates a resource grid in a wireless communication system to which the present disclosure may be applied. In reference to FIG. 3, it is illustratively described that a resource grid is configured with $N_{RB}^\mu N_{sc}^{RB}$ subcarriers in a frequency domain and one subframe is configured with $14 \cdot 2^\mu$ OFDM symbols, but it is not limited thereto. In an NR system, a transmitted signal is described by OFDM symbols of $2^\mu N_{symb}^{(\mu)}$ and one or more resource grids configured with $N_{RB}^\mu N_{sc}^{RB}$ subcarriers. Here, $N_{RB}^\mu \leq N_{RS}^{max,\mu}$. The $N_{RB}^{max,\mu}$ represents a maximum transmission bandwidth, which may be different between an uplink and a downlink as well as between numerologies.

In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^\mu N_{sc}^{RB}-1$ is an index in a frequency domain and $l'=0,...,2^\mu N_{symb}^{(\mu)}-1$ refers to a position of a symbol in a subframe. When referring to a resource element in a slot, an index pair (k,l) is used. Here, $l=0,...,N_{symb}^\mu-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^\mu$ and a resource element (k,l) for a subcarrier spacing configuration $\mu$ in a frequency domain is given as in the following Equation 1.

【Equation 1】

$$n_{CRB}^\mu = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^\mu = n_{PRB}^\mu + N_{BWP,i}^{start,\mu}$$

$N_{BWP,i}^{start,\mu}$ is a common resource block that a BWP starts relatively to common resource block 0.

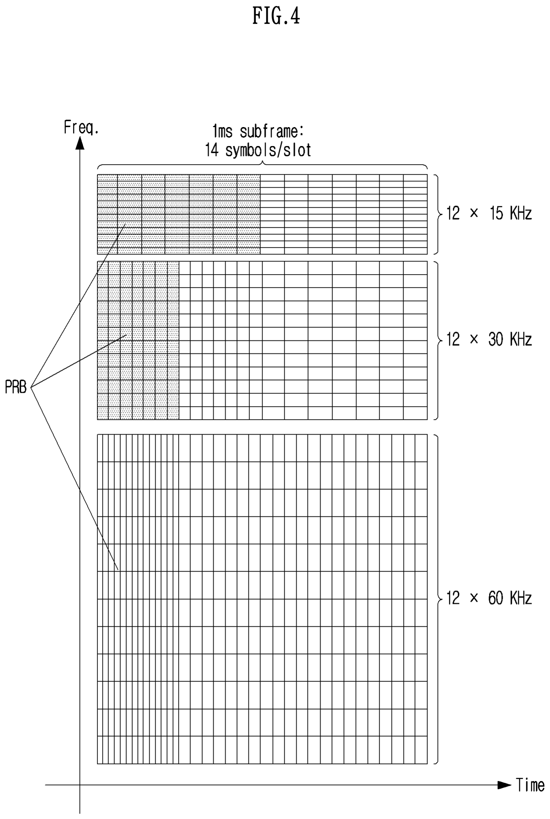

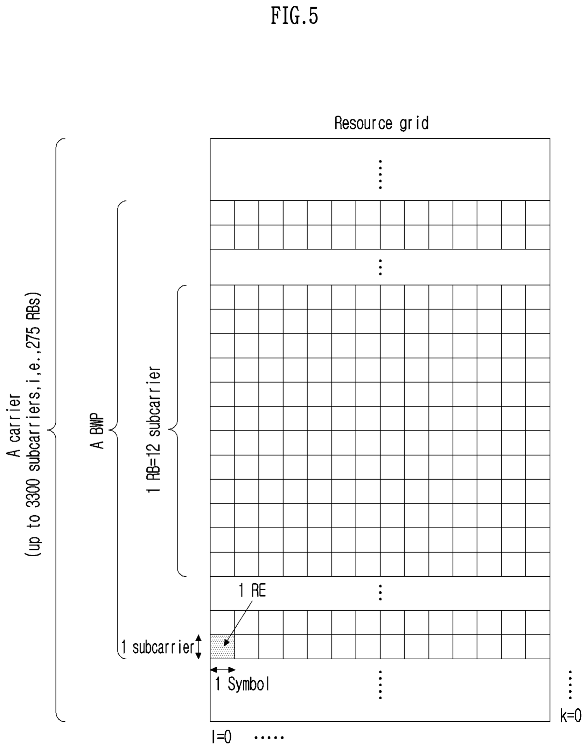

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP (Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

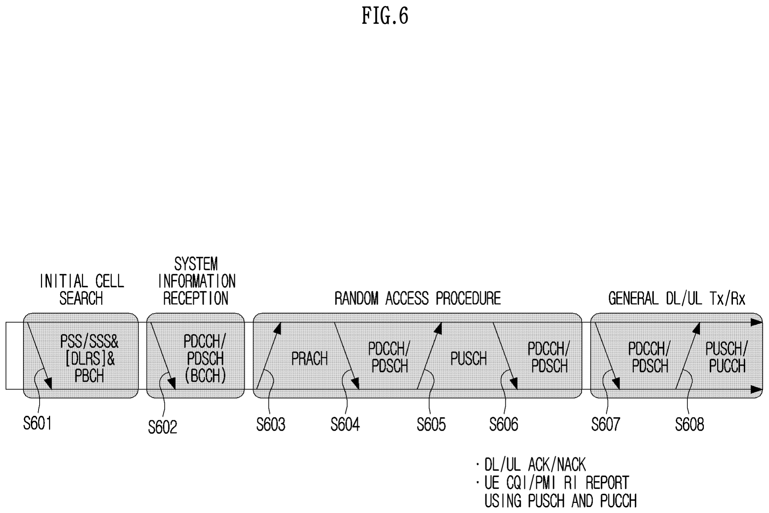

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |

(continued)

| DCI Format | Use |
|---|---|
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation and Coding Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

PUCCH Configuration and Repetition Transmission Method

A PUCCH may deliver uplink control information (UCI). UCI may include at least one of hybrid automatic request (HARQ)-ACK information, scheduling request (SR) or CSI information. An UCI type (or a usage, a payload type), a transmission duration, etc. that may be transmitted per PUCCH format may vary. For example, as in Table 6 below, a PUCCH may be divided into five formats.

[Table 6]

| Format | OFDM Symbol-based PUCCH Duration | Number of Bits | Usage | Waveform | 변조 (modulation) |
|---|---|---|---|---|---|
| 0 | 1-2 | $\leq 2$ | HARQ-ACK, SR | CP-OFDM | - |
| 1 | 4-14 | $\leq 2$ | HARQ-ACK, SR | CP-OFDM | BPSK 또는 QPSK |
| 2 | 1-2 | >2 | HARQ-ACK, SR, CSI | CP-OFDM | QPSK |
| 3 | 4-14 | >2 | HARQ-ACK, SR, CSI | DFT-s-OFDM | $\pi/2$ BPSK 또는 QPSK |

(continued)

| Format | OFDM Symbol-based PUCCH Duration | Number of Bits | Usage | Waveform | 변조 (modulation) |
|---|---|---|---|---|---|
| 4 | 4-14 | >2 | HARQ-ACK, SR, CSI | DFT-s-OFDM | $\pi/2$ BPSK 또는 QPSK |

A PUCCH in format 0 and 2 may be expressed as a short duration PUCCH and a PUCCH in format 1, 3 and 4 may be expressed as a long duration PUCCH. A PUCCH in format 0, 1 and 4 may be multiplexed in a frequency/time domain, but a PUCCH in format 2 and 3 may not be multiplexed in a frequency/time domain. In order to enhance a PUCCH coverage, a method such as a sequence-based DMRS-less PUCCH configuration, higher DMRS density, a dynamic PUCCH repetition factor indication or DMRS bundling for a PUCCH, improved frequency hopping, improved power control, an increase in the number of allowed repetitions, etc. may be utilized.

In addition, PUCCH repetition transmission may be performed to enhance a PUCCH coverage. Here, only a PUCCH in format 1, 3 and 4 (i.e., a long duration PUCCH) may be transmitted repeatedly. The number of repetition transmissions of a PUCCH may be configured by higher layer signaling (e.g., 'nrofSlots' included in 'PUCCH-Format-Config') and may be configured as 2, 4 or 8.

A repeatedly transmitted PUCCH may have the same position within each slot. In other words, the number of first symbols and consecutive symbols of a PUCCH repeatedly transmitted in each slot may be the same. In addition, when frequency hopping is configured by higher layer signaling (e.g., 'interslotFrequencyHopping' included in 'PUCCH-FormatConfig') for a repeatedly transmitted PUCCH, a position of a PUCCH during an even slot may be defined by a 'startPRB' information element and a position of a PUCCH during an odd slot may be defined by a 'secondHopPRB' information element.

The higher layer signaling ('PUCCH-FormatConfig') which includes information related to the number of repetition transmissions of a PUCCH and frequency hopping may be configured as in Table 7 below.

【Table 7】

```
PUCCH-FormatConfig ::=                     SEQUENCE {
        interslotFrequencyHopping          ENUMERATED {enabled}        OPTIONAL, -- Need R
        additionalDMRS                     ENUMERATED {true}           OPTIONAL, -- Need R
        maxCodeRate                        PUCCH-MaxCodeRate           OPTIONAL, -- Need R
```

```
        nrofSlots                          ENUMERATED {n2,n4,n8}       OPTIONAL, -- Need S
        pi2BPSK                            ENUMERATED {enabled}        OPTIONAL, -- Need R
        simultaneousHARQ-ACK-CSI           ENUMERATED {true}           OPTIONAL    -- Need R
}
```

And, a terminal may not be multiplexed for a different UCI type of a repeated PUCCH. Accordingly, when a different PUCCH is overlapped in a duration within a slot, a terminal may transmit only one PUCCH according to a priority rule, and drop the remaining PUCCHs or transmit the earliest starting PUCCH with the same priority. As an example of a priority rule, a priority may be higher in order of HARQ-ACK, SR and CSI. In other words, only a PUCCH with a long duration format may be repeatedly transmitted only within the same position of each slot and the number of actual repetitions may be smaller than the number of times configured by higher layer signaling. In addition, it may be difficult to perform PUCCH repetition transmission in a specific slot (e.g., a special slot, etc.) that includes all of a downlink, an uplink and a flexible symbol. In this case, the above-described method may be utilized for PUCCH coverage enhancement.

In addition, PUCCH repetition transmission may be performed in the specific slot through UCI split (e.g., splitting an UCI payload into a short duration PUCCH and a long duration PUCCH). But, the above-described method has a limit that a latency decrease has a higher profit compared to coverage enhancement.

For coverage enhancement, as an example of a PUCCH repetition transmission method, like the existing PUSCH repetition type B, a PUCCH may be transmitted repeatedly in a consecutive symbol instead of configuring a repetition by designating a start symbol and a length within a slot.

PUSCH Repetition

A terminal may transmit the same PUSCH repeatedly multiple times. For example, the same PUSCH may mean a PUSCH scheduled by one uplink grant (e.g., uplink grant provided through DCI or configured grant by RRC signaling). Alternatively, the same PUSCH may mean a PUSCH carrying the same data (e.g., a transport block (TB)).

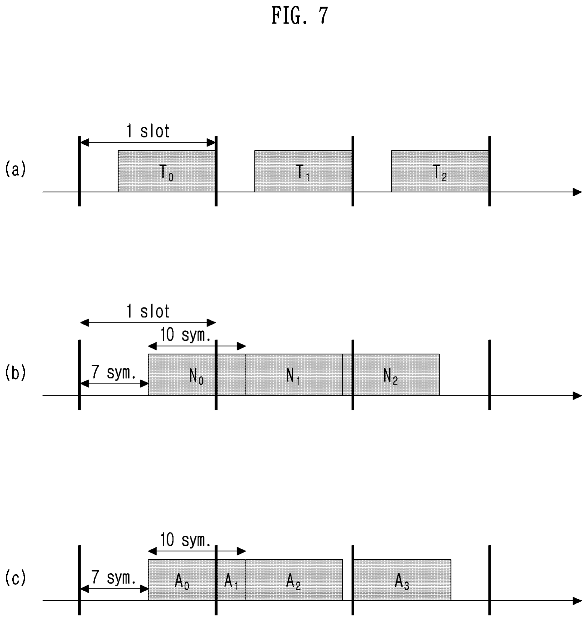

FIG. 7 is a diagram for describing examples of PUSCH repetition transmission to which the present disclosure may be applied.

For a PUSCH repetition type, Type A and Type may be defined.

PUSCH repetition type A is a slot-based repetition and an example in FIG. 7(a) shows that three repetitions $T_0$, $T_1$ and $T_2$ are performed respectively in three slots. In PUSCH repetition type A, the same transmission start symbol position and the same number (or length) of transmission symbols may be applied to each of a plurality of slots.

When there is an invalid symbol that may not be used for PUSCH transmission among symbol resources configuring a specific PUSCH repetition, transmission of a corresponding PUSCH repetition may not be performed by being dropped. For example, when a total of four PUSCH repetition transmissions of Rep0, Rep1, Rep2 and Rep3 are performed, if an invalid symbol is included in a symbol resource configuring Rep1, transmission of Rep1 may be dropped and only transmission of Rep0, Rep2 and Rep3 may be performed. Accordingly, the number of actually performed repetitions may be less than or equal to the configured number of repetitions.

For PUSCH repetition type A, a terminal may configure frequency hopping by a higher layer parameter. In PUSCH repetition type A, one of two frequency hopping modes, i.e., intra-slot frequency hopping and inter-slot frequency hopping may be configured for a terminal. Intra-slot frequency hopping may be applied to single-slot PUSCH transmission or multi-slot PUSCH transmission and inter-slot frequency hopping may be applied to multi-slot PUSCH transmission. For inter-slot frequency hopping, frequency hopping is performed at a slot boundary. For intra-slot frequency hopping, the number of symbols in a first hop and the number of symbols in a second hop are configured by a base station and frequency hopping is performed at a configured symbol boundary.

For PUSCH repetition type B, a repetition may be performed in a unit of a symbol length that a PUSCH is actually transmitted. For example, as in an example of FIG. 7(b), when a symbol length that a PUSCH is transmitted is 10 symbols, a PUSCH repetition may be performed in a unit of 10 consecutive symbols. A transmission time unit of a PUSCH repetition which does not consider a slot boundary, an invalid symbol, etc. may be referred to as a nominal repetition. In an example of FIG. 7(b), $N_0$, $N_1$ and $N_2$ represent three nominal repetitions.

For an actual PUSCH repetition, one PUSCH may not be transmitted at a slot boundary. Accordingly, when a PUSCH transmission includes a slot boundary, as in an example of FIG. 7(c), two actual repetitions may be distinguished at a slot boundary. For example, two actual repetitions $A_0$ and $A_1$ corresponding to nominal repetition $N_0$ may be distinguished at a slot boundary. In other words, 7 first symbols of $N_0$ may correspond to $A_0$ and 3 subsequent symbols of $N_0$ may correspond to $A_1$.

One PUSCH transmission may be performed only through consecutive symbols. Accordingly, when there is an invalid symbol in a time resource where a PUSCH repetition should be transmitted, an actual repetition may be configured by using consecutive symbols at a boundary of an invalid symbol. For example, when a time length of one PUSCH repetition is 10 symbols, if symbol index #0-#9 among 14 symbols within one slot correspond to one nominal repetition, but symbol index #3-#5 is an invalid symbol, symbol index #0-#2 and symbol index #6-#9 excluding it may configure one actual repetition, respectively. If a symbol that may not be used for PUSCH transmission (e.g., a DL symbol indicated by DCI format 2_0) is included in a resource of one actual repetition, a corresponding actual repetition may be dropped and may not be transmitted.

For PUSCH repetition type B, a terminal may configure frequency hopping by a higher layer parameter. For PUSCH transmission in a configured grant method, a frequency hopping mode may follow a configuration in a DCI format that activates it. For PUSCH repetition type B, inter-repetition frequency hopping or inter-slot frequency hopping may be configured. For inter-repetition frequency hopping, frequency hopping is applied per the number of nominal repetitions. Here, the number of nominal repetitions means the number of repetitions indicated by RRC signaling, etc., and when one nominal repetition passes (includes) a slot boundary (or a DL/UL switching time point), it is divided into two actual repetitions before and after a slot boundary (or a DL/UL switching time point), so the number of actual repetitions may be greater than the number of nominal repetitions. For inter-slot frequency hopping, frequency hopping may be performed at a slot boundary.

DMRS

A DMRS related to a data channel (e.g., a PDSCH, a PUSCH, etc.) may be configured with a front-load DMRS and an additional DMRS.

A transmission time resource position of a front-load DMRS may be determined based on a mapping type of a data channel, a start symbol position of a data channel, the number of DMRS symbols, etc.

A mapping type of a data channel (e.g., a PDSCH mapping type, a PUSCH mapping type, etc.) may be configured as Type A or Type B (e.g., slot-based or non-slot-based). For example, a mapping type of a data channel may be configured through RRC signaling.

For slot-based transmission, a transmission start symbol position of a front-load DMRS may be a third symbol or a fourth symbol within a transmission resource of a data channel. Information indicating whether a transmission start symbol position of a DMRS is the third or the fourth of transmission symbols of a data channel may be provided through a PBCH.

A front-load DMRS may be configured with one or two consecutive symbols (i.e., a single-symbol DMRS or a double-symbol DMRS). Information on the number of symbols may be provided through RRC signaling.

A symbol mapping type within a transmission resource of a front-load DMRS may be configured as two types (e.g., Type 1 or Type 2) and configuration information thereon may be provided through RRC signaling. According to Type 1, F-CDM (i.e., code division multiplexing (CDM) in a frequency domain), T-CDM (i.e., CDM in a time domain) and/or FDM may be used to support 4 or 8 antenna ports respectively according to whether a DMRS symbol length is 1 or 2. For Type 2, F-CDM, T-CDM and/or FDM may be used to support 6 or 12 antenna ports, respectively, according to whether a DMRS symbol length is 1 or 2.

The number of additional DMRSs may be one of 0, 1, 2 or 3. The maximum number of additional DMRSs transmitted may be determined through RRC signaling and the number of additional DMRSs actually transmitted within each maximum number of DMRSs and a transmission symbol position may be determined according to a length of an OFDM symbol that a data channel is transmitted.

The number of symbols and a mapping type of each additional DMRS may be determined to be the same as the number of symbols and a mapping type of a front-load DMRS.

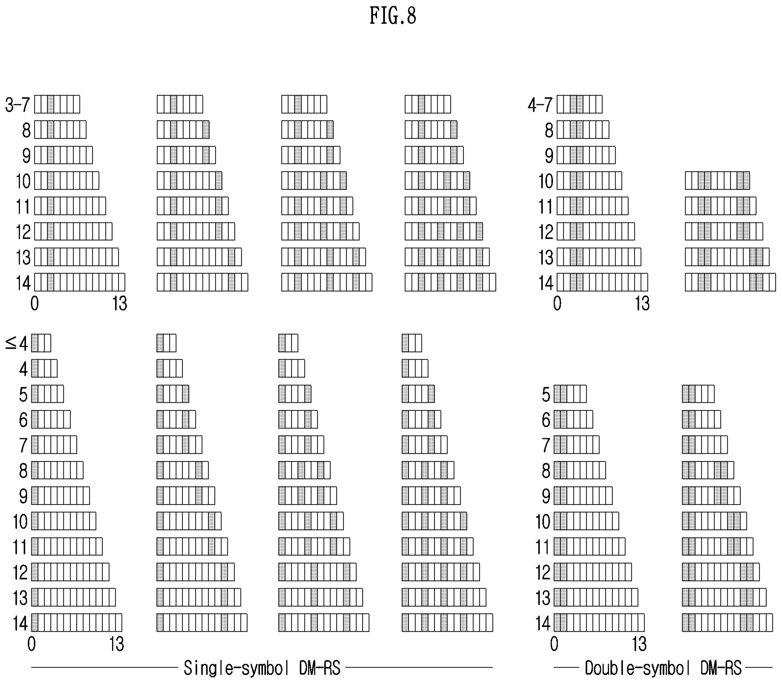

FIG. 8 is a diagram showing examples of a DMRS symbol position to which the present disclosure may be applied. FIG. 8(a) corresponds to examples of mapping type A, and a start symbol position ($l_0$) is 2 and may be defined as a symbol position relative to a slot boundary. FIG. 8(b) corresponds to examples of mapping type B, and may be defined as a symbol position relative to the start of transmission.

A position and number of symbols of a PUSCH DMRS may vary depending on the number of symbols that a PUSCH is transmitted. For example, when PUSCH repetition type B is applied, a symbol position and number of DMRSs may be determined based on a length of an actual repetition of a PUSCH. In this case, a position of a DMRS in a slot may be different per PUSCH repetition.

Start and Termination of Time Domain Window for Uplink Channel

For transmission of an uplink channel such as a PUCCH and a PUSCH, a variety of transmission parameters (or a transmission characteristic value) such as transmission power, phase, MCS, a frequency resource (e.g., a PRB) position, a bandwidth (BW), etc. may be configured/indicated. Accordingly, a terminal may perform uplink channel transmission based on a configured/indicated transmission parameter.

For uplink channel repetition transmission, a terminal may maintain some or all of transmission parameters applied to uplink channel transmission for a predetermined time duration (e.g., a time domain window). For example, in order to improve the performance of a base station's receiving end, joint channel estimation may be introduced. For joint channel estimation in a base station, it may be required to constantly maintain a transmission parameter (e.g., phase, power, etc.) applied to a transmission operation of a terminal.

In examples below, joint channel estimation may be interpreted to have the same meaning as DMRS bundling. In other words, joint channel estimation/DMRS bundling may include configuring/indicating a terminal to transmit with maintaining a transmission parameter applied (e.g., some or all of power, phase, MCS, a PRB position, a BW, etc.) and a terminal performing uplink transmission accordingly, in order to perform join estimation in a time domain for improving performance of a base station such as channel estimation, decoding, etc.

In examples below, a time domain window for joint channel estimation or DMRS bundling may be simply referred to as a "time domain window" to the extent that there is no risk of confusion. The present disclosure includes a method of dynamically applying a time domain window, in particular, dynamically applying a size of a time domain window.

One purpose of a discussion for improving a wireless communication system is to alleviate imbalance of coverage between an uplink and a downlink. This imbalance is fundamentally due to the maximum transmission power of a terminal (e.g., UE) being lower than the maximum transmission power of a base station (e.g., gNB). As a single solution to resolve this imbalance, repetition of uplink transmission may be applied for coverage enhancement (CE). Repetition of uplink transmission includes, for example, repeatedly transmitting the same signal/channel on multiple time units. Performance of this repetition transmission greatly depends on performance of DMRS-based channel estimation. For example, when a signal received from a base station corresponds to a SNR region, channel estimation accuracy may decrease, and deterioration of performance gain may occur due to repetition of low-performance channel estimation. In order to prevent it, DMRS bundling as described above may be applied to an uplink channel (e.g., a PUCCH, a PUSCH, etc.) that repetition transmission is configured/applied. Accordingly, channel estimation performance may be improved, and improvement of performance gain may be expected according to repetition of channel estimation with enhanced performance.

Here, DMRS bundling requires an assumption that various elements defining a channel such as power consistency, a timing advance (TA) command, a spatial filter, etc. are the same between a terminal and a base station, and may achieve an effect which may be expected by configuring/applying a size of DMRS bundling (or a time domain window (TDW) described above) based on this assumption. In other words, in order to achieve the effect of improving channel estimation performance due to DMRS bundling, a consistent understanding of a position of a start point and an end point of DMRS bundling (or a TDW) between a terminal and a base station is required.

For various reasons, a terminal may not maintain/apply a size of DMRS bundling (or a TDW) configured/indicated by a base station. For example, due to a difference in a capability performing another uplink transmission other than DMRS bundling-based uplink transmission, performing downlink monitoring/reception, or maintaining power/phase continuity, a terminal may not apply a size of DMRS bundling (or a TDW) expected by a base station. A terminal needs a method of partitioning a size of DMRS bundling (or a TDW) configured/indicated by a base station into smaller sizes, changing a start point or an end point, or requesting or notifying this change to a base station.

Hereinafter, a TDW is described in more detail.

A bundle of time units (e.g., slots) in which uplink transmission is performed by fixing/maintaining a transmission characteristic of a terminal in order to improve reception performance of a base station for uplink transmission from a terminal is referred to as a DMRS bundle, and a DMRS bundle may be configured in a unit of a TDW. For joint channel estimation of a base station, a terminal may perform uplink transmission by guaranteeing phase continuity, power consistency, etc. within a TDW. In other words, within a configured TDW, a terminal may be configured/indicated not to perform an operation that violates phase continuity, power consistency, etc. This TDW may be configured at the same time when joint channel estimation is enabled by higher layer (e.g., RRC) signaling.

For joint channel estimation for uplink repetition ransmission, all repetitions may be covered by at least one consecutive/non-consecutive TDW. Each configured TDW may include at least one consecutive physical slot. A length of a configured TDW may be explicitly configured within L, a predetermined maximum length. The start of a first configured TDW may correspond to first uplink channel transmission. The start of another configured TDW may be implicitly determined before first repetition. The end of a last configured TDW may correspond to the end of last uplink channel transmission. Within one "configured TDW" (or nominal TDW), at least one "actual TDW" may be implicitly determined. The start of a first actual TDW may correspond to first uplink channel transmission within a configured TDW. After one actual TDW is started, a terminal is expected to maintain power consistency and phase continuity until a specific condition is satisfied, and an actual TDW may be ended after a time point when a specific condition is satisfied. A specific condition: may include a case in which an actual TDW reaches the end of last uplink channel transmission within a configured TDW; a case in which an event occurs that violates power consistency and phase continuity (e.g., a DL slot, reaching of an actual TDW to the maximum duration, DL reception/monitoring, high priority transmission, frequency hopping, precoder cycling, etc.), etc. When power consistency and phase continuity are violated by an event, whether a new actual TDW is generated may be determined according to a terminal capability for whether to support restart of DMRS bundling. For example, for a terminal that supports DMRS bundling restart, a new actual TDW may be generated after a corresponding event; and for a terminal that does not support DMRS bundling restart, a new actual TDW may not be generated until a configured TDW is ended.

As such, a TDW may be defined based on a hierarchy of a configured TDW and an actual TDW. After receiving RRC signaling for a configured TDW, a terminal may determine/apply at least one actual TDW within a configured TDW. This actual TDW may be implicitly determined/indicated based on an event.

Here, according to a type or a characteristic of an event (e.g., whether a terminal may predict an event or a dynamic or semi-static characteristic of an event), a decision on start/end/restart for an actual TDW may be changed. If a common rule/understanding of an actual TDW-related operation according to an event type/characteristic between a base station and a terminal is not applied, a base station and a terminal may operate based on a boundary of start/end of a different actual TDW (e.g., a boundary where power/phase, etc. is changed). This inconsistency may be accumulated within a configured TDW to cause an error propagation problem. Accordingly, there is a need to specifically define a method for configuring/determining an actual TDW according to a type/a characteristic of an event, but it has not been clearly defined yet.

The present disclosure describes various examples of a method for clearly configuring/determining/defining an operation of a terminal related to start/end/restart of an actual TDW based on an event within a configured TDW (or a nominal TDW).

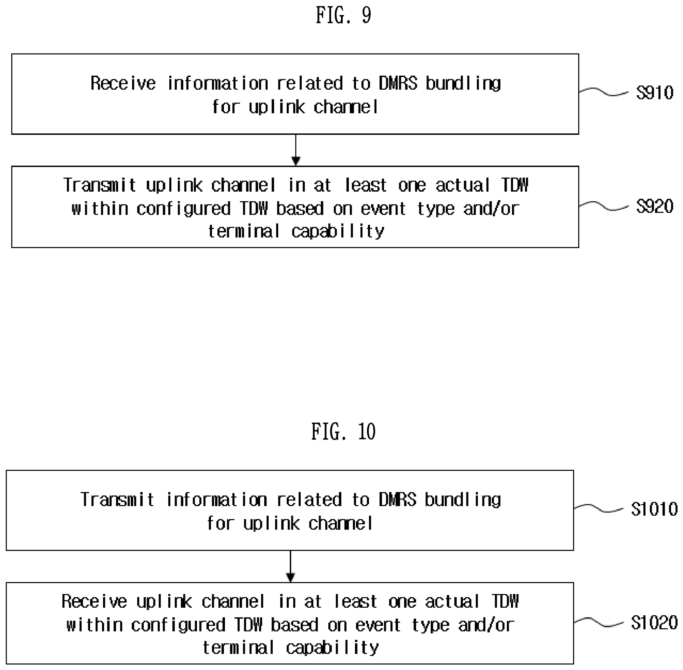

FIG. 9 is a diagram for describing an example of an uplink channel transmission method of a terminal according to the present disclosure.

In S910, a terminal may receive information related to DMRS bundling for an uplink channel from a network.

Information related to DMRS bundling may be information that explicitly indicates enabling/disabling of DMRS bundling through higher layer signaling. DMRS bundling and a time domain window (TDW) may be jointly enabled/disabled.

For example, information related to DMRS bundling may be provided through higher layer (e.g., RRC) signaling. For example, an uplink channel may include at least one of a physical uplink shared channel (PUCCH) or a physical uplink control channel (PUSCH).

In S920, a terminal may transmit an uplink channel to a network in at least one actual TDW within a configured TDW.

Uplink channel transmission within a configured TDW may include repetition transmission.

For example, at least one actual TDW included in a configured TDW may include a first actual TDW, or may include a first and second actual TDW. Power consistency and phase continuity may be maintained across repetition transmission of an uplink channel within each actual TDW.

For example, a first TDW may be ended in relation to an event. When an event occurs in which power consistency and phase continuity are not maintained over repetition transmission of an uplink channel, a first actual TDW may be ended before an event.

Whether to start/generate/restart a second actual TDW may be determined by a terminal based on at least a type of an event. Whether to start/generate/restart a second actual TDW may be determined by a terminal based on a terminal capability for a type of a specific event.

An event type may be divided into a first type or a second type. Alternatively, an event type may be divided into a dynamic type or a semi-static type. Alternatively, an event type may be divided into a type triggered by DCI/a MAC-CE that does not include frequency hopping, etc. or a type that includes frequency hopping, etc.

For example, when a first actual TDW is ended by a first type of event, whether to generate/restart a second actual TDW responding to a corresponding event may be determined based on a capability of a terminal. For example, if a capability of a terminal supports DMRS bundling or TDW restart, a second actual TDW may be generated/restarted in response to a first type of event. Alternatively, if a capability of a terminal does not support DMRS bundling or TDW restart, a second actual TDW may not be generated/restarted in response to a first type of event.

For example, when a first actual TDW is ended due to a second type of event, a second actual TDW responding to a corresponding event may be generated/restarted. In more detail, when a first actual TDW is ended by a second type of event, a second actual TDW responding to a corresponding event may be generated/restarted regardless of a terminal capability or all the time.

FIG. 10 is a diagram for describing an example of an uplink channel reception method of a base station according to the present disclosure.

In S1010, a base station may transmit information related to DMRS bundling for an uplink channel to a terminal.

In S1020, a base station may receive an uplink channel from a terminal in at least one actual TDW within a configured TDW.

In an example described by referring to FIG. 10, contents for information related to DMRS bundling, a configured TDW, an actual TDW, generation/restart of an actual TDW based on an event type and/or a terminal capability, maintenance of power consistency and phase continuity for uplink channel repetition transmission accordingly, etc. are the same as those described by referring to FIG. 9, an overlapping description is omitted.

Hereinafter, various examples of the present disclosure for an actual TDW configuration/determination based on an event characteristic/type, a terminal capability, etc. are described.

A DMRS bundle described later describes a PUSCH and a PUCCH that repetition is configured, but examples of the present disclosure may be also similarly applied to another uplink channel/signal and/or a downlink channel/signal.

Examples described later may be applied to a DMRS bundling configuration, and a variety of other methods may be also applied. Although DMRS bundling is configured for a terminal in some way, a terminal may not apply DMRS bundling and may perform uplink transmission at an individual transmission occasion. For a resource corresponding to this individual transmission occasion, a base station may expect DMRS bundling to be applied and perform joint channel estimation or joint decoding. In other words, when a situation/an event occurs in which a terminal may not apply DMRS bundling unlike a configuration of a base station and a terminal drops transmission or performs transmission which does not satisfy a condition (e.g., maintenance of power consistency/phase continuity) for performing DMRS bundling/joint channel estimation, channel estimation/decoding performance of a base station for uplink transmission may be significantly lowered.

When a DMRS bundle is configured/indicated for a terminal (by prior agreement or signaling), but a terminal fails to apply it, a terminal may report a corresponding slot index, a DMRS bundle index, etc. to a base station, or define a rule in advance so that a base station can know this. Among methods described later, when a terminal reports the start of an actual TDW and/or the end of an actual TDW, examples indicated through a DMRS resource configured by prior agreement between a base station and a terminal may include the following.

For example, configuring a plurality of (e.g., two) DMRS resources (e.g., ports, phases, etc.) in advance for a terminal, using the same DMRS resource within an actual TDW and using another DMRS resource based on the start of an actual TDW and/or the end of an actual TDW may be included as an example of reporting for the start of an actual TDW and/or the end of an actual TDW. For example, it may be assumed that DMRS port 0 and DMRS port 2 are configured by a base station for a terminal. When reporting the start of an actual TDW, a terminal may consider transmission using DMRS port 2 for the start (slot) of a new actual TDW if DMRS port 0 was used in a previous actual TDW. Alternatively, when reporting the end of an actual TDW, a terminal may perform reporting by using DMRS port 0 for a last slot of an actual TDW.

For example, among a plurality of DMRS resources configured for a terminal, a specific DMRS resource may be configured by prior agreement to refer to the start or end of an actual TDW. For example, it may be assumed that DMRS port 0 and DMRS port 2 are configured by a base station for a terminal. In this case, a terminal may indicate/report the start (or end) of an actual TDW based on a slot transmitted by using a DMRS with a low (or high) DMRS port number by prior agreement. For example, a slot transmitted to DMRS port 0 may indicate/report the start of an actual TDW.

Hereinafter, examples of an actual TDW configuration/determination based on an event are described.

A terminal may differently configure/determine an actual TDW according to whether an event is predictable or unpredictable. Examples of an event that may affect phase continuity or power consistency of uplink transmission are the same as in Table 8 below.

[Table 8]

| |
|---|
| - high priority transmission, |
| - transmission power drop due to dynamic power sharing of dual connectivity(DC)) |
| - transmission is dropped due to uplink collision of DC, |
| - UE operates fine timing tracking to adjust FFT boundary when UE receive DL signal), |
| - autonomous timing adjustment, |
| - large temperature variations, |
| - DL slot based on DL/UL configuration for unpaired spectrum, |
| - the actual TDW reaches the maximum duration, |
| - DL reception/monitoring occasion for unpaired spectrum, |
| - frequency hopping, |
| - precoder cycling, etc. |

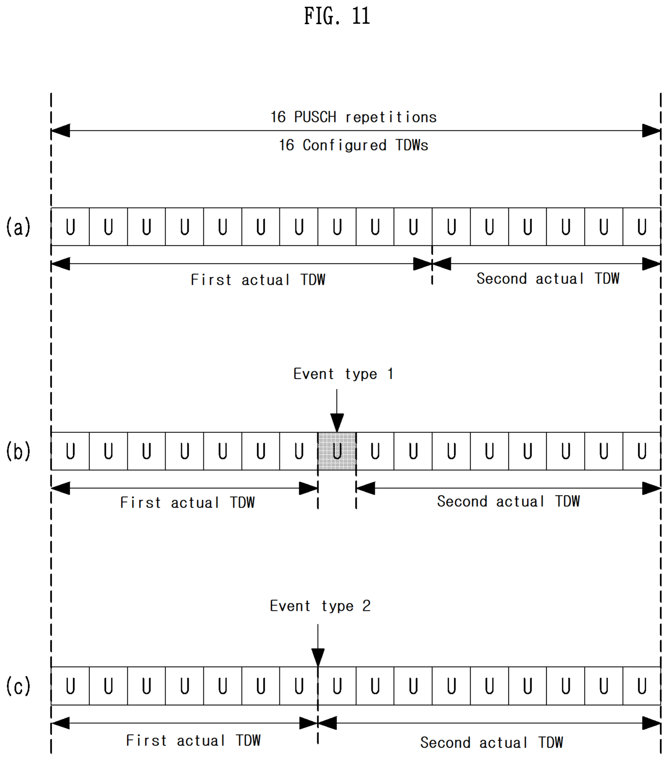

In addition to the above-described exemplary events, for a case in which maintenance of phase continuity and power consistency of consecutive uplink transmission of a terminal is impossible or limited, a new configuration of an actual TDW is required. For example, according to a type of an event, it may be divided into event type 1 (or a first type of event) and event type 2 (or a second type of event), and a start time point of an actual TDW, whether it starts, etc. according to an event type may be divided differently. FIG. 11 is a diagram showing examples of a TDW to which the present disclosure may be applied.

In examples of FIG. 11, it is assumed that the maximum duration of an actual TDW (i.e., the maximum length of time that a terminal may maintain phase continuity and power consistency) is 10 slots based on a terminal capability. In addition, it is assumed that a TDW (or a nominal TDW) configured for a terminal is 16 slots, and it is assumed that a terminal performs 16 PUSCH repetitions. In FIG. 11, U represents a unit of a slot.

An example of FIG. 11(a) shows a case in which the maximum duration of a terminal is reached and an actual TDW is ended. A terminal may start a new actual TDW (a second actual TDW) in an immediately adjacent slot after a first actual TDW is ended.

In an example of FIG. 11(b), when event type 1 occurs within a first actual TDW (or before an event occurs), a corresponding first actual TDW may be ended. A new second actual TDW may be generated/restarted after an event is ended.

For example, event type 1 may correspond to a case in which uplink transmission for CE such as joint channel estimation/DMRS bundling, etc. is impossible for a time duration of at least one corresponding slot due to downlink reception, downlink monitoring, another uplink transmission, etc.

An example of FIG. 11(c) shows that when event type 2 occurs within a first real TDW (or before an event occurs), a corresponding first actual TDW is ended and a new second actual TDW is configured immediately after an event is ended.

For example, event type 2 may correspond to a case in which a transmission characteristic such as application of a TPC command, application of timing advance (TA) adjustment, autonomous TA of a terminal, frequency hopping, etc. may be changed, but it may be transmitted by configuring a new actual TDW in an immediately adjacent slot of an actual TDW ended by an event. This event type 2 may include reaching the maximum duration.

For example, as shown in FIG. 11, event type 1 may correspond to an event in which PUSCH transmission is impossible for at least one slot and event type 2 may correspond to an event in which a new actual TDW may start in an immediately adjacent slot after the end of an actual TDW. Dividing an event in this way corresponds to an example of the present disclosure, and an event may be divided according to various criteria as described later.

Embodiment 1

This embodiment includes examples of generation/restart of a new actual TDW according to a time duration of an event.

A terminal and a base station may configure/define/indicate a time duration per event by prior agreement. In other words, a specific time duration may be mapped for each event. When a time duration of an event is equal to or greater than (or exceeds) 1 slot, a terminal may determine that a new actual TDW starts from a slot that is not included in a time duration of an event after a time duration of an event after the end of an actual TDW related to event occurrence. Alternatively, when a time duration of this event is 0, a terminal may determine that a new actual TDW starts from an immediately adjacent (or next) slot after the end of an actual TDW related to event occurrence (since a time duration of an event is 0). To this end, a base station and a terminal may specifically consider the following operation.

Embodiment 1-1

A base station and a terminal may determine that a time duration of all events that are not separately configured/indicated is 0 (i.e., a default time duration of an event = 0), and for an event having a time duration configured/indicated as a non-zero value, a terminal may indicate the start of a new actual TDW or report a time duration of a corresponding event to a base station.

For example, a base station assumes that a time duration of all events is 0 and that a terminal may start a new actual TDW after the end of an event. Here, whether to start a new actual TDW according to the end of an event may vary depending on a capability of a terminal. It may be assumed that this terminal capability is reported to a base station in advance and a base station knows this terminal capability in advance. When a new actual TDW may start according to a capability of a terminal, a base station may expect the start of a new actual TDW in an adjacent slot if a terminal does not separately report/indicate immediately after ending an actual TDW due to an event. When a terminal may not perform transmission for CE such as joint channel estimation/DMRS bundling, etc. for at least one slot after the end of an actual TDW according to an event, it may report to a base station whether an actual TDW will be newly started (or a start position).

For example, it is assumed that a terminal has a terminal capability that may generate/restart an actual TDW in response to an event. In this case, it is assumed that a terminal reports this capability information/signaling to a base station in advance and a base station already knows a terminal capability. For example, when an actual TDW is ended in a n-th slot due to an event, a terminal may start a new actual TDW in a n+1-th slot without separately reporting/indicating it to a base station.

Alternatively, an actual TDW is ended in a n-th slot due to an event of a terminal, and this event may prohibit a transmission for CE such as joint channel estimation/DMRS bundling, etc. in at least one slot. This event, for example, may correspond to event type 1 described above. When k slots are required for this event and transmission for CE such as joint channel estimation/DMRS bundling, etc. is impossible during k slots, a terminal may start and transmit a new actual TDW in a n+k-th slot or a subsequent slot, and in this case, it may report/indicate to a base station that a new actual TDW will be started (or was started) in a n+k-th slot or a subsequent slot.

This report/indication may be performed through a specific DMRS resource, etc. by prior agreement or may notify a start point of an actual TDW later through UCI, a MAC-CE, etc.

Embodiment 1-2

A base station and a terminal may determine that a time duration of all events that are not separately indicated is X slots (i.e., a default time duration of an event=X), and for an event having a time duration configured/indicated as a value that is not X, a terminal may indicate the start of a new actual TDW or report a time duration of a corresponding event to a base station. Here, a value of X may be a value determined by prior agreement between a base station and a terminal, may be a value configured/indicated by a base station to a terminal through RRC/a MAC-CE/DCI, etc. or may be defined as 1 slot. It considers that for most time durations, a time duration of a non-zero event is 1 slot.

For example, a base station may assume that a time duration of all events is X slots and that a terminal may start a new actual TDW after X slots corresponding to a time duration of an event after tne end of an event. In this case, for a time duration of an event, X slots may be a value designated by a base station and provided to a terminal in advance, and for example, may be configured/indicated to a terminal through RRC, a MAC-CE, DCI, etc. In addition, it may be considered that a default value for this X value (e.g., 1 slot) is determined by prior agreement, which may be defined as a value used when a base station does not configure/indicate a value for X slots to a terminal. A value of X may be updated periodically or may be defined as being valid for a certain period of time after being configured/indicated. For example, when a value of X is indicated along with scheduling of a PUSCH/a PUCCH for CE such as joint channel estimation/DMRS bundling, etc., a corresponding value may be effectively applied only to scheduled PUSCH/PUCCH transmission. for example, when a value of X is configured/indicated through a MAC-CE, RRC signaling, etc., a corresponding value may be effectively applied for a time duration by prior agreement. When a value of X is configured/indicated through RRC signaling, whether to enable CE transmission such as joint channel estimation/DMRS bundling, etc. and a time duration of an event may be configured/indicated for a terminal at the same time (or together, or jointly).

Here, whether to generate/restart a new actual TDW upon the end of an event may vary depending on a capability of a terminal. It may be assumed that this capability of a terminal is reported to a base station in advance and a base station knows this capability of a terminal in advance. When a new actual TDW may be started according to a capability of a terminal, a base station may expect that a terminal will start a new actual TDW after X slots when there is no separate report/indication after ending an actual TDW due to an event. When a terminal performs the new start of an actual TDW in a slot other than a time point after X slots after the end of an actual TDW according to an event, a terminal may report this start of an actual TDW to a base station.

For example, it is assumed that a terminal has a terminal capability that may start an actual TDW by an event. In this case, it is assumed that a terminal reports this capability information/signaling to a base station in advance and a base station knows a terminal capability in advance. For example, when an actual TDW is ended in a n-th slot due to an event, a terminal may generate/restart a new actual TDW in a n+X-th slot without separately reporting/indicating it to a base station.

Alternatively, an actual TDW may be ended in a n-th slot due to an event and a terminal may start a new actual TDW before a n+X-th slot due to the end of this event within X slots and may start a new actual TDW after a n+X-th slot due to the end of this event after X slots. In other words, when k slots are required for an event and transmission for CE such as joint channel estimation/DMRS bundling, etc. is impossible during k slots (k>X), a terminal may start and transmit a new actual TDW in a n+k-th slot or a subsequent slot, and in this case, a terminal may report/indicate to a base station that a new actual TDW will be started (or was started) in a slot after a n+k-th slot.

Alternatively, when event type 2 occurs among the above-described event types and an actual TDW is ended in a n-th slot, a terminal may generate/restart a new actual TDW after a n+1-th slot. In this case, a terminal may report/indicate to a base station that a new actual TDW will be started (or was started) in a n+1-th slot.

This report/indication may be performed through a specific DMRS resource, etc. by prior agreement or may notify a start point of an actual TDW later through UCI, a MAC-CE, etc.

In examples described above, a terminal may report the start of an actual TDW and/or the end of an actual TDW by prior agreement with a base station. As such, when an operation is configured/defined to report the start/end of an actual TDW by prior agreement, if a terminal does not report the start/end of an actual TDW, a base station may assume that a corresponding terminal does not configure and transmit an actual TDW and accordingly, it may perform an operation such as estimation/decoding, etc. for uplink transmission.

Embodiment 2

This embodiment includes examples of generation/restart of a new actual TDW according to a type of an event. It is assumed that an event type in this embodiment is divided into a semi-static type and a dynamic type.

A terminal may consider that an actual TDW (i.e., a first actual TDW) is ended by an event within a configured TDW, and a base station and a terminal should have the same understanding of whether a new actual TDW (i.e., a second actual TDW) is started after this event. When a base station and a terminal do not have the same understanding of whether an actual TDW is started or a boundary due to this event, it may cause reception deterioration of a base station. Accordingly, according to an event type, a terminal may operate according to the following examples regarding whether to generate/restart a new actual TDW.

Embodiment 2-1

When a first actual TDW within a configured TDW is ended by all types of event, a terminal may be expected to start (or generate/restart) a new second actual TDW after a corresponding event.

For example, a base station may be expected to start (or generate/restart) a new second actual TDW after a corresponding event when a first actual TDW is ended for all types of events regardless of a capability of a terminal (or always). When a first actual TDW is ended by an event of a terminal within a configured TDW, a base station may assume that transmission after an event of a terminal within a corresponding configured TDW is the start of a new second actual TDW.

Since a base station expects a terminal to start a second actual TDW for transmission after the end of a first actual TDW due to an event within a configured TDW, it may be pre-agreed (by signaling between a base station and a terminal) or may be predefined (without signaling between a base station and a terminal) not to report/indicate the start (or generation/restart) of a second actual TDW to a base station. In this case, since a terminal starts a second actual TDW for transmission after the end of a first actual TDW due to an event within a configured TDW, it may report only an end time point of a first actual TDW to a base station.

Alternatively, a terminal may report/indicate the start (or generation/restart) of an actual TDW to a base station by prior agreement or according to prior definition. Accordingly, when a terminal does not start an actual TDW in transmission after the end of an actual TDW due to an event within a configured TDW, the start of this actual TDW may not be reported/indicated to a base station, and when transmission of a terminal within a configured TDW is the start of an actual TDW, it may be reported/indicated to a base station.

The above-described reporting/indication on the start/end of an actual TDW may be performed through a DMRS resource, etc., or through UCI/a MAC-CE, etc. by prior agreement.

Embodiment 2-2

According to a capability of a terminal, it may be divided into a terminal that may start a new second actual TDW and a terminal that may not start a new second actual TDW for transmission after a first actual TDW ended by an event within a configured TDW.

When a capability of a terminal is supported, a terminal may be expected to start (or generate/restart) a new second actual TDW after an event when a first actual TDW within a configured TDW is ended by all types of event. When a capability of a terminal is not supported, a terminal may be expected to be unable to start (or generate/restart) a new second actual TDW after an event when a first actual TDW within a configured TDW is ended by all types of event.

For example, for a basic operation of a terminal understood by a base station, whether to generate/restart an actual TDW is determined according to a terminal capability. A terminal with a capability may understand that after a first actual TDW is ended by an event within a configured TDW, transmission within a corresponding configured TDW means the start of a second actual TDW. A terminal without a capability may understand that after a first actual TDW is ended by an event within a configured TDW, transmission within a corresponding configured TDW does not mean the start of a second actual TDW.

A terminal may report a capability of whether to generate/restart a new actual TDW after an event within a configured TDW in advance to a base station through RRC/UCI, etc. Accordingly, it may be assumed that a base station and a terminal have a common understanding of this terminal capability.

Based thereon, for a terminal with a capability, a base station may assume that after a first actual TDW is ended by an event within a configured TDW, transmission within a corresponding configured TDW is the start (or generation/restart) of a new second actual TDW. In this case, a terminal may report/indicate an end time point of a first actual TDW to a base station without separately reporting/indicating a start time point of a second actual TDW to a base station.

For a terminal without a capability, a base station may expect that after a first actual TDW is ended by an event within a configured TDW, an actual TDW does not exist in transmission within a corresponding configured TDW. Contrary to a base station's expectation, when a terminal starts a second actual TDW, a terminal may report/indicate the start of a second actual TDW.

The above-described reporting/indication on the start/end of an actual TDW may be performed through a DMRS resource, etc., or through UCI/a MAC-CE, etc. by prior agreement.

Embodiment 2-3

After a first actual TDW ended by an event within a configured TDW, whether to start (or generate/restart) a new second actual TDW may be configured/determined according to a type of a corresponding event and/or a capability of a terminal.

For example, for a first type event, whether to generate/restart a second actual TDW may be determined according to a terminal capability. For a second type event, the generation/restart of a second actual TDW may be determined regardless of a terminal capability (or all the time).

A type of an event may be divided according to various criteria. For example, a first type may be a dynamic type and a second type may be a semi-static type. A dynamic type may correspond to an event in which a terminal/a base station has little or no predictability regarding the occurrence/end of an event. A semi-static type may correspond to an event in which a terminal/a base station has predictability or high predictability regarding the occurrence/end of an event. For example, a dynamic type event may correspond to an event in which a base station may not predict the end of an actual TDW of a terminal in advance or a base station may not predict an end time point of an actual TDW or prediction accuracy is low. For example, a semi-static type event may correspond to a case in which a base station may predict the end of an actual TDW of a terminal in advance. For example, since frequency hopping operates according to a preconfigured/defined pattern, prediction of a terminal/a base station is easy or possible, so it may correspond to a semi-static type or second type event. An event triggered by a dynamic indication other than frequency hopping (e.g., a method in which

EP 4 686 289 A2

application of a terminal is relatively quick like DCI/a MAC-CE other than a method in which application of a terminal is relatively delayed like RRC signaling) may correspond to a dynamic type or firs type event because prediction of a terminal is difficult.

A terminal and a base station may determine/expect whether to start a new actual TDW by dividing a type of an event (e.g., by dividing it into a first type or a second type or by dividing it into a semi-static event and a dynamic event). According to prior definition or by prior agreement between a base station and a terminal, an event that may occur may be divided into a first type and a second type or a semi-static event and a dynamic event. According to a type of an event, a terminal operation may be defined/determined/expected.

According to the exemplary criteria for dividing an event type, examples of an event in Table 8 may be divided into a first type (e.g., a dynamic type) and a second type (e.g., a semi-static type) as follows.

[Table 9]

| First Type / Dynamic | Second Type / Semi-static |
|---|---|
| - high priority transmission,- transmission power drop due to dynamic power sharing of DC<br>- transmission is dropped due to uplink collision of DC,<br>- UE operates fine timing tracking to adjust FFT boundary when UE receive DL signal,<br>- autonomous timing adjustment,<br>- large temperature variations | - DL slot based on DL/UL configuration for unpaired spectrum,<br>- the actual TDW reaches the maximum duration,<br>- DL reception/monitoring occasion for unpaired spectrum, - frequency hopping),<br>- precoder cycling) |

Alternatively, according to a time duration of an event, it may be divided into a semi-static event or a dynamic event. For example, an event which is not expected to generate/restart a new actual TDW in an immediately adjacent slot after the end of an actual TDW because a time duration of at least 1 slot is consumed may correspond to a semi-static event. An event which is expected to generate/restart a new actual TDW in an immediately adjacent slot after the end of an actual TDW because a time duration of less than 1 slot is consumed may correspond to a dynamic event. According to the exemplary criteria for dividing an event type, examples of an event in Table 8 may be divided into a first type (e.g., a dynamic type) and a second type (e.g., a semi-static type) as follows.

[Table 10]

| First Type / Dynamic | Second Type / Semi-static |
|---|---|
| - the actual TDW reaches the maximum duration, - frequency hopping,<br>- precoder cycling,<br>- transmission power drop due to dynamic power sharing of DC<br>- autonomous timing adjustment,<br>- large temperature variations | - DL slot based on DL/UL configuration for unpaired spectrum,<br>- DL reception/monitoring occasion for unpaired spectrum, - high priority transmission),<br>- transmission is dropped due to uplink collision of DC,<br>- UE operates fine timing tracking to adjust FFT boundary when UE receive DL signal) |

In addition to examples of an event described above, a type of all events that may occur may be divided, and an event to which the present disclosure is applied is not limited to examples described above. In addition, events to be divided may be assumed to belong to any one of a first type or a second type (or any one of a dynamic type or a semi-static type), and a case is not assumed in which one event corresponds to a plurality of types. Alternatively, it may operate by assuming that an event that is pre-agreed or predefined by a base station and a terminal is a first type and all remaining events are a second type.

According to this embodiment, regardless of a capability, when a first actual TDW is ended by a semi-static event (or a second type event) within a configured TDW, a terminal may be expected to start a new second actual TDW after a corresponding event. In addition, when a first actual TDW is ended by a dynamic event (or a first type event) within a configured TDW, a terminal may or may not expect whether to start a new second actual TDW after a corresponding event according to a terminal capability. In other words, when a first actual TDW is ended by a dynamic/first type event within a configured TDW, a terminal with a capability may be expected to start a new second actual TDW, and conversely, a terminal without a capability may be expected not to start a new second actual TDW.

A base station may determine that when a first actual TDW is ended by a semi-static (or second type) event within a configured TDW, transmission of a terminal within a corresponding configured TDW is the start of a new second actual TDW. Accordingly, a terminal may not separately report/indicate the start of an actual TDW to a base station. A terminal may report/indicate only an end time point of an actual TDW to a base station.

A base station may determine that when a first actual TDW is ended by a dynamic (or first type) event within a configured TDW, transmission from a terminal with a capability after a corresponding event within a corresponding configured TDW is the start (or generation/restart) of a second actual TDW. Accordingly, a terminal with a capability may not separately report/indicate the start of an actual TDW to a base station. A terminal with a capability may report/indicate only an end time point of an actual TDW to a base station.

A base station may determine that when a first actual TDW is ended by a dynamic (or first type) event within a configured TDW, transmission from a terminal without a capability after a corresponding event within a corresponding configured TDW does not mean the start (or generation/restart) of a second actual TDW. Accordingly, when a terminal without a capability performs transmission by generating/restarting a second actual TDW after a dynamic (or first type) event within a configured TDW, it may report/indicate a start time point of a second actual TDW to a base station. In addition, a terminal without a capability may also report/indicate an end time point of an actual TDW to a base station.

The above-described reporting/indication on the start/end of an actual TDW may be performed through a DMRS resource, etc., or through UCI/a MAC-CE, etc. by prior agreement.

Criteria for dividing a type of events described above are illustrative, and a type of events may be divided according to other criteria according to a characteristic/attribute of events. In other words, a scope of the present disclosure includes whether the generation/restart of a new actual TDW within a corresponding configured TDW is based on a terminal capability (e.g., for a first type event) or whether it operates regardless of a terminal capability (e.g., for a second type event) according to a type of an event related to the end of an actual TDW within a configured TDW, and a scope of the present disclosure is not limited to examples of an event belonging to a corresponding type.

General Device to which the Present Disclosure may be applied

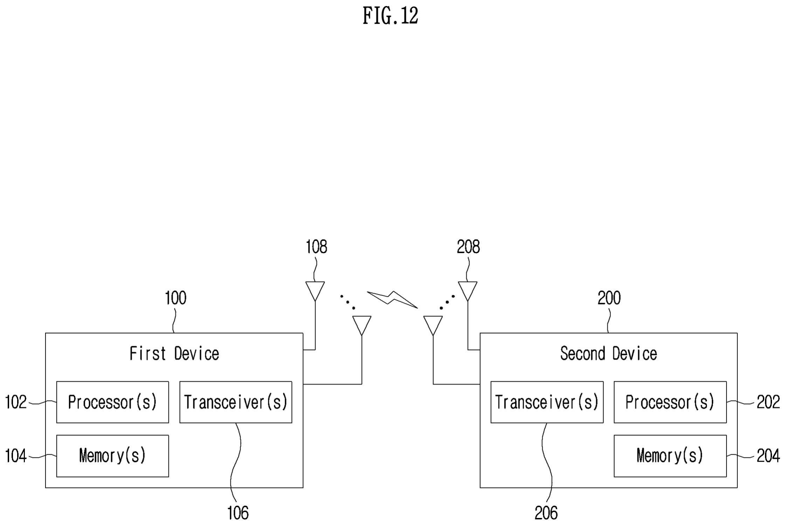

FIG. 12 illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure is defined by the appended independent claims.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

Also provided are the following illustrative, non-exhaustive examples of the subject-matter encompassed herein, which relate to:

A method for transmitting an uplink channel by a terminal in a wireless communication system, the method comprising:

> receiving, from a network, configuration information related to a demodulation reference signal (DMRS) bundling for the uplink channel; and
> transmitting, to the network, the uplink channel in a first actual time domain window (TDW) within a configured TDW, or in the first actual TDW and a second actual TDW within the configured TDW,
> wherein the first actual TDW ends in relation to an event,
> wherein based on the event being a first type event, whether to generate the second actual TDW in response to the event is based on a capability of the terminal.

The method described in the immediately preceding paragraph, wherein:

based on the capability of the terminal supporting a restart of a TDW or the DMRS bundling, the second actual TDW is generated in response to the first type event, or

based on the capability of the terminal not supporting the restart of the TDW or the DMRS bundling, the second actual TDW is not generated in response to the first type event.

The method described in the first one of the two immediately preceding paragraphs, wherein:
based on an event in which power consistency and phase continuity are not maintained occurring across transmissions of a repetition of the uplink channel, the first actual TDW ends before the event.

The method described in the first one of the three immediately preceding paragraphs, wherein:
based on the event being a second type event, the second actual TDW in response to the event is generated.

The method described in the immediately preceding paragraph, wherein:
based on the event being the second type event, the second actual TDW in response to the event is generated regardless of the capability of the terminal or always generated.

The method described in the first one of the two immediately preceding paragraphs, wherein:
the first type event includes an event triggered by downlink control information (DCI) other than frequency hopping or by a medium access control-control element (MAC-CE), or corresponds to a dynamic event.

The method described in the first one of the three immediately preceding paragraphs, wherein:
the second type event includes frequency hopping, or corresponds to a semi-static event.

The method described in the first one of the seven immediately preceding paragraphs, wherein:
power consistency and phase continuity are maintained across transmissions of a repetition of the uplink channel within each actual TDW.

The method described in the first one of the eight immediately preceding paragraphs, wherein:
information related to the DMRS bundling is provided through higher layer signaling.

The method described in the first one of the nine immediately preceding paragraphs, wherein:
the uplink channel includes at least one of a physical uplink shared channel (PUCCH) or a physical uplink control channel (PUSCH).

A terminal for transmitting an uplink channel in a wireless communication system, the terminal comprising:

at least one transceiver; and
at least one processor connected to the at least one transceiver,
wherein the at least one processor is configured to:

receive, through the at least one transceiver, from a network, configuration information related to a demodulation reference signal (DMRS) bundling for the uplink channel; and
transmit, through the at least one transceiver, to the network, the uplink channel in a first actual time domain window (TDW) within a configured TDW, or in the first actual TDW and a second actual TDW within the configured TDW,
wherein the first actual TDW ends in relation to an event,
wherein based on the event being a first type event, whether to generate the second actual TDW in response to the event is based on a capability of the terminal.

A method for receiving an uplink channel by a base station in a wireless communication system, the method comprising:

transmitting, to a terminal, configuration information related to a demodulation reference signal (DMRS) bundling for the uplink channel; and;
receiving, from the terminal, the uplink channel in a first actual time domain window (TDW) within a configured TDW, or in the first actual TDW and a second actual TDW within the configured TDW,
wherein the first actual TDW ends in relation to an event,
wherein based on the event being a first type event, whether to generate the second actual TDW in response to the event is based on a capability of the terminal.

A base station for receiving an uplink channel in a wireless communication system, the base station comprising:

at least one transceiver; and
at least one processor connected to the at least one transceiver,
wherein the at least one processor is configured to:
transmit, through the at least one transceiver, to a terminal, configuration information related to a demodulation reference signal (DMRS) bundling for the uplink channel; and

receive, through the at least one transceiver, from the terminal, the uplink channel in a first actual time domain window (TDW) within a configured TDW, or in the first actual TDW and a second actual TDW within the configured TDW, wherein the first actual TDW ends in relation to an event,

wherein based on the event being a first type event, whether to generate the second actual TDW in response to the event is based on a capability of the terminal.

A processing unit configured to control a terminal in a wireless communication system, the processing unit comprising:

at least one processor; and

at least one computer memory which is operably connected to the at least one processor and stores instructions for performing a method described in any of the first one to tenth of the thirteen immediately preceding paragraphs based on being executed by the at least one processor.

At least one non-transitory computer readable medium storing at least one instruction, wherein:

the at least one instruction controls a device to perform a method described in any of the first one to tenth of the fourteen immediately preceding paragraphs in a wireless communication system by being executed by at least one processor.

**Claims**

1.  A method comprising:

    transmitting, by a terminal to a network, an uplink channel in an actual time domain window, TDW, based on a demodulation reference signal, DMRS, bundling for the uplink channel being enabled,

    wherein the end of the actual TDW corresponds to a last uplink channel transmission of an uplink channel repetition within a specific length of a TDW, based on the actual TDW reaching the end of the last uplink channel transmission within the specific length of the TDW, or

    wherein the end of the actual TDW corresponds to an uplink channel transmission before an event, based on an occurrence of the event which causes power consistency and phase continuity not to be maintained across transmissions of a repetition of the uplink channel within the specific length of the TDW; and

    transmitting, by the terminal to the network, the uplink channel in a new actual TDW based on the occurrence of the event, wherein the start of the new actual TDW is after the event within the specific length of the TDW, wherein the new actual TDW is created in response to the event being a first type event, subject to a capability of the terminal related to whether the terminal supports a restart of the DMRS bundling.

2.  The method according to claim 1, wherein:
    the first type event includes an event triggered by downlink control information, DCI, other than frequency hopping or by a medium access control-control element, MAC-CE.

3.  The method according to claim 1, wherein:
    wherein the new actual TDW is created in response to the event being a second type event.

4.  The method according to claim 3, wherein:
    the second type event includes frequency hopping or an event not triggered by DCI or by a MAC-CE.

5.  The method according to claim 1, wherein:
    the new actual TDW is created in response to the event being a second type event regardless of the capability of the terminal.

6.  The method according to claim 1, further comprising:

    receiving, by the terminal from the network, configuration information related to the DMRS bundling for the uplink channel,

    wherein the configuration information includes information related to whether the DMRS bundling for the uplink channel is enabled or not, and information related to the specific length of the TDW.

7. The method according to claim 6, wherein:
the configuration information related to the DMRS bundling is provided through higher layer signaling.

8. The method according to claim 1, wherein:
the uplink channel includes at least one of a physical uplink shared channel, PUCCH, or a physical uplink control channel, PUSCH.

9. A terminal (100, 200) comprising:

at least one transceiver (106, 206); and
at least one processor (102, 202) connected to the at least one transceiver,
wherein the at least one processor is configured to:

transmit, through the at least one transceiver, to a network, an uplink channel in an actual time domain window, TDW, based on a demodulation reference signal, DMRS, bundling for the uplink channel being enabled,

wherein the end of the actual TDW corresponds to a last uplink channel transmission of an uplink channel repetition within a specific length of a TDW, based on the actual TDW reaching the end of the last uplink channel transmission within the specific length of the TDW, or
wherein the end of the actual TDW corresponds to an uplink channel transmission before an event, based on an occurrence of the event which causes power consistency and phase continuity not to be maintained across transmissions of a repetition of the uplink channel within the specific length of the TDW; and

transmit, through the at least one transceiver, to the network, the uplink channel in a new actual TDW based on the occurrence of the event, wherein the start of the new actual TDW is after the event within the specific length of the TDW,

wherein the new actual TDW is created in response to the event being a first type event, subject to a capability of the terminal related to whether the terminal supports a restart of the DMRS bundling.

10. A method comprising:

receiving, by a base station from a terminal, an uplink channel in an actual time domain window, TDW, based on a demodulation reference signal, DMRS, bundling for the uplink channel being enabled,

wherein the end of the actual TDW corresponds to a last uplink channel transmission of an uplink channel repetition within a specific length of a TDW, based on the actual TDW reaching the end of the last uplink channel transmission within the specific length of the TDW, or
wherein the end of the actual TDW corresponds to an uplink channel transmission before an event, based on an occurrence of the event which causes power consistency and phase continuity not to be maintained across transmissions of a repetition of the uplink channel within the specific length of the TDW; and

receiving, by the base station from the terminal, the uplink channel in a new actual TDW based on the occurrence of the event, wherein the start of the new actual TDW is after the event within the specific length of the TDW,
wherein the new actual TDW is created in response to the event being a first type event, subject to a capability of the terminal related to whether the terminal supports a restart of the DMRS bundling.

11. A base station comprising:

at least one transceiver; and
at least one processor connected to the at least one transceiver,
wherein the at least one processor is configured to:

receive, through the at least one transceiver, from a terminal, an uplink channel in an actual time domain window, TDW, based on a demodulation reference signal, DMRS, bundling for the uplink channel being enabled,

wherein the end of the actual TDW corresponds to a last uplink channel transmission of an uplink channel repetition within a specific length of a TDW, based on the actual TDW reaching the end of the last uplink channel transmission within the specific length of the TDW, or
wherein the end of the actual TDW corresponds to an uplink channel transmission before an event, based on an occurrence of the event which causes power consistency and phase continuity not to be maintained across transmissions of a repetition of the uplink channel within the specific length of the TDW; and

receive, , through the at least one transceiver, from the terminal, the uplink channel in a new actual TDW based on the occurrence of the event, wherein the start of the new actual TDW is after the event within the specific length of the TDW,

wherein the new actual TDW is created in response to the event being a first type event, subject to a capability of the terminal related to whether the terminal supports a restart of the DMRS bundling.

12. At least one non-transitory computer readable medium storing at least one instruction, that controls a device to perform a method according to any one claim of claim 1 to claim 8 by being executed by at least one processor.

# FIG.1

# FIG.2

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

FIG.5

FIG.6

EP 4 686 289 A2

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

FIG. 7

(a)

1 slot

T$_0$     T$_1$     T$_2$

(b)

1 slot

10 sym.

7 sym.

N$_0$    N$_1$    N$_2$

(c)

10 sym.

7 sym.

A$_0$   A$_1$   A$_2$    A$_3$

FIG.8

FIG. 9

| |
|---|
| Receive information related to DMRS bundling for uplink channel ⟍ S910 |

↓

| |
|---|
| Transmit uplink channel in at least one actual TDW within configured TDW based on event type and/or terminal capability ⟍ S920 |

FIG. 10

| |
|---|
| Transmit information related to DMRS bundling for uplink channel ⟍ S1010 |

↓

| |
|---|
| Receive uplink channel in at least one actual TDW within configured TDW based on event type and/or terminal capability ⟍ S1020 |

# FIG. 11

EP 4 686 289 A2

# FIG.12